# EUROPEAN PATENT SPECIFICATION

(11) **EP 1 783 412 B1**
(45) Date of publication and mention of the grant of the patent: **25.08.2010**
(21) Application number: 05425781.1
(22) Date of filing: 08.11.2005
(51) Int. Cl.: F16L 7/00

(54) **Method for regulating a spacer collar for a pipe and system for positioning a pipe**
Verfahren zum Verstellen einer Abstandschelle für Rohre und Anordnung zum Positienieren eines Rohres
Méthode de réglage d'un collier d'entretoisement pour tuyaux et système de positionnement d'un tuyau

(43) Date of publication of application: 09.05.2007
(73) Proprietor: RACI S.r.l., 20128 Milano (IT)
(72) Inventor: Geremia, Riccardo, 20080 Basiglio (IT); Paterlini, Aronne, 20036 Meda (IT)
(74) Representative: Cinquantini, Bruno

(56) References cited:
- EP-A- 1 598 582
- DE-A1- 3 200 188
- US-A- 5 592 975
- US-A- 5 944 361
- US-A1- 2003 201 025

## Description

### Field of the invention

The present invention refers to a method for regulating spacer collars for pipes, and a system for positioning a pipe inside a jacket pipe including a spacer collar and a set of additional elements to be applied to at least part of the spacer elements of said spacer collar.

### Prior art

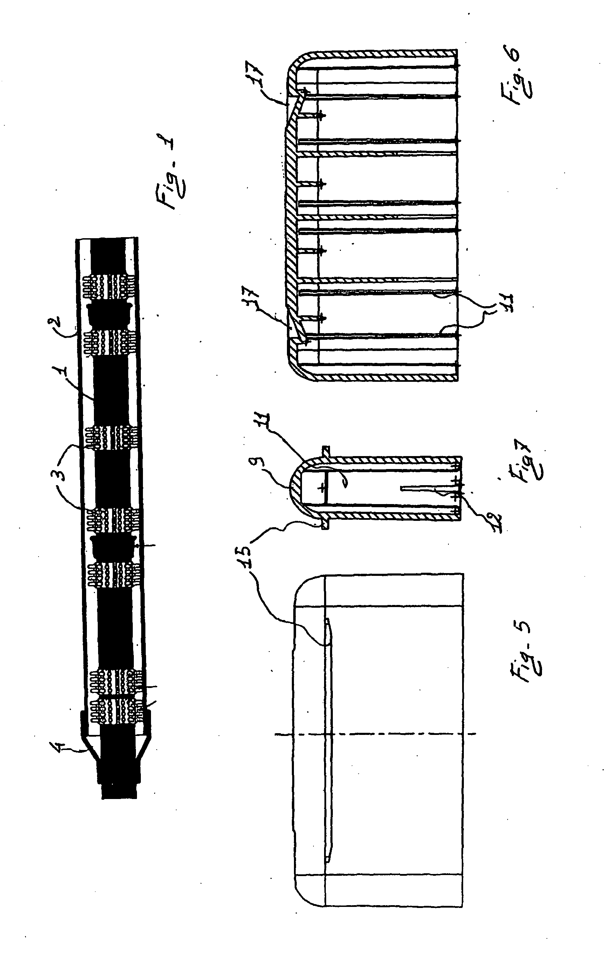

Underground pipes are usually used for gas, water distribution and to convey wastewaters and also for other applications. The latter must be suitably protected against external stress; in particular, where they cross roads, railways or similar, or also where the pipes run parallel to these structures, it is necessary and prescribed by the regulations in many countries that they be contained in jacket pipes. The pipes must be kept separate, at suitable distance, from the inner wall of the jacket pipe. Spacer collars are used for this purpose; they are inserted at suitable intervals along the pipe and fastened to it so that they cannot slide along the pipe during introduction, without being a hindrance to insertion. The collars are made of suitable material with regard to mechanical strength and resistance to corrosion, and also to guarantee electrical insulation between the pipe and the jacket pipe; plastic materials, such as polyethylene, are preferred. Figure 1 is a cross-section showing the situation of a pipe 1 in the jacket pipe 2, with the spacer collars 3 at a crossing. Suitable seals, for example of the bellows type, close the jacket pipe at the ends of the crossing, allowing the pipe to pass through.

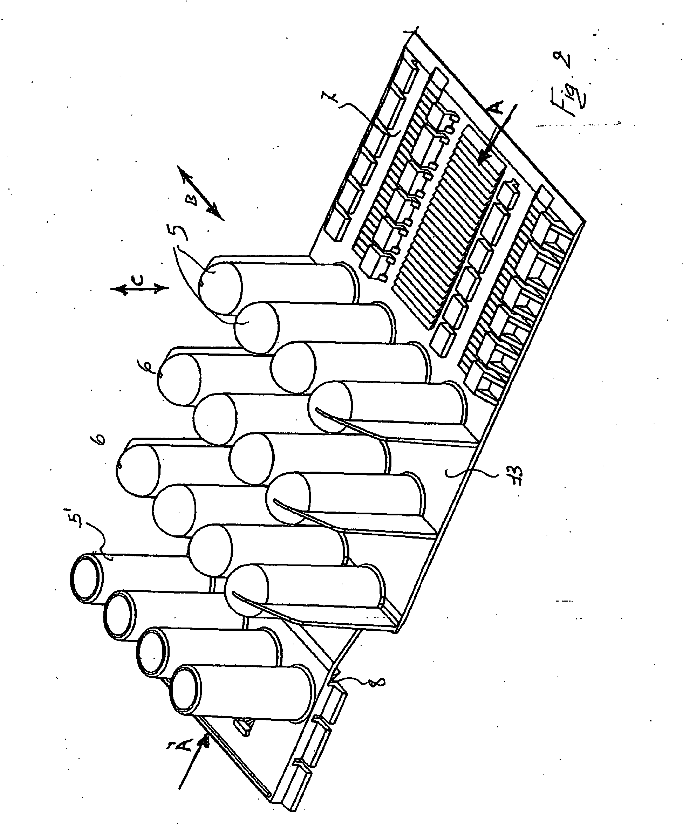

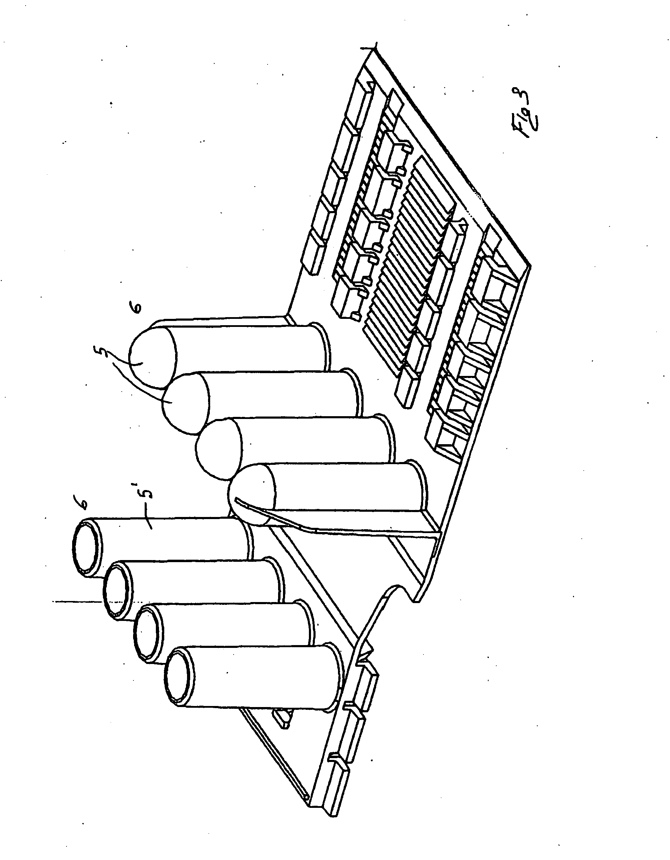

Collars of this type are described, for example, in patent applications IT 26191 A/75 and IT 25340 A/77, collars provided with a set of spacer elements consisting of longitudinal fins. More recent types of collar are sold by company RACI Srl (Milan, Italy). Similarly to the above mentioned collars, they also consist of one or more modules, such as those shown in figures 2 and 3, that can be fastened together in order to form the collar and to be tightened around the pipe. They are characterised by a set of spacer fins 6, consisting substantially of a set of cylindrical elements 5 aligned in a longitudinal direction (that is to say running parallel to the longitudinal direction of the pipe when the collar is fitted thereon); the fins are placed around the pipe to keep it separate from the jacket pipe.

The modules, available in various sizes, can be adapted to different pipe diameters, modifying the number of elements used to form a collar. To achieve this purpose and to simplify construction, play between the outer diameter of the ring of spacer fins and the inner diameter of the jacket pipe is very high, in the order of tens of centimetres. This may cause various drawbacks. For example, when constructing the network of pipes, the jacket pipe may be flooded and the pipe, not yet secured at the ends, floats inside it. The ends may therefore be in a different position from that established and this may impair fastening to the rest of the duct, outside the jacket pipe. The considerable freedom of movement of the pipe inside the jacket pipe may also cause problems during construction as flooding cannot be excluded even after the jacket pipe is closed, with generation of undesirable stress.

It would be desirable to reduce play between the pipe provided with collars and the jacket pipe while also being adapt to use a few different standardised sizes of modules and height of the spacer fins for different size pipes and jacket pipes.

Adaptation of the dimensions with the collar fitted, also during introduction of the pipe in the jacket pipe, with the possibility of modifying the correction to be made at that time would also be preferable.

Document US 2003/0201025 discloses the preamble of claims 1 and 6.

### Summary of the invention

The problems outlined above have been solved according to the present invention by a method for regulating a spacer collar for pipes according to claim 1 and the corresponding system of claim 6.

According to a second embodiment of the invention, the spacers are spacer fins with a substantially longitudinal layout with respect to said pipe, consisting optionally of several elements aligned substantially in this direction.

According to a further embodiment of the invention, the additional elements are applied to one or more contiguous fins, preferably to at least three contiguous fins.

Preferably, the supplementary elements are characterised by means for fastening for further supplementary elements and the method includes fastening of at least one supplementary element to another supplementary element.

Locking of the supplementary elements using means for locking, preferably reversible, present on the supplementary elements and on the additional elements, which may be of an elastic type, is also preferred.

### List of figures

The present invention will now be illustrated with the detailed description of preferred but not exclusive forms of embodiment, furnished for example purposes only, with the aid of the attached figures, where:
figure 1 is a schematic representation of a pipe positioned inside a jacket pipe by means of spacer collars according to the prior art;
figures 2 and 3 are a schematic representation of two different modules for construction of spacer collars according to the prior art;
figure 4 is a schematic representation of a module like that of figure 2, with additional and supplementary elements applied according to the method of the present invention;
figures 5, 6 and 7 are schematic representations of a side view, a side view in longitudinal section and a cross-section view of an additional element that can be used in a method according to the present invention;
figures 8, 9 and 10 are schematic representations of a front view, of a longitudinal section and of a prospect view of a supplementary element that can be used in a method according to the present invention.

### Detailed description of an embodiment

Figures 2 and 3 show modules designed to form, when joined together, spacer collars for pipes used in a method according to a preferred embodiment of the invention. The modules are characterised by male and female fastening ends 7 and 8 whereby a male end can be inserted in the direction of arrows A and A' (tangential with respect to the pipe) in a female end of another module. The ends are provided with a blocking system that prevents detachment from each other.

Several modules are suitably connected to form a collar, which can be closed and tightened, according to a known method, for example using specific clamps, around the pipe. The modules have spacers 6 which may be disposed along the longitudinal direction (arrow B) of the pipe. For example, they may consist of several elements 5 aligned in said direction. The aforesaid spacers, of known type, extend in the direction of arrow C, i.e. a radial direction with respect to the type, in order to take up a radial dimension (that is to say take up a distance from the surface of the pipe and an external element such as the inner wall of a jacket pipe). The presence of a plurality of spacers, preferably fins at suitable intervals along the collar, allows to keep the pipe separate from the jacket pipe, as shown in figure 1. Preferably, their height is such that they have the same radial overall dimensions with respect to the wall of the pipe. In the case of figures 2 and 3, elements 5' may therefore be shorter at the ends 8, which are designed to overlap the corresponding end (similar to 7) of another module in order to offset the increased thickness due to overlapping of the two ends.

The modules can be obtained, as usual, by injection moulding of plastic material or in any other suitable manner. Collars of the above mentioned type are sold by RACI Srl under the names F, G, E, H, P, Q, M and N.

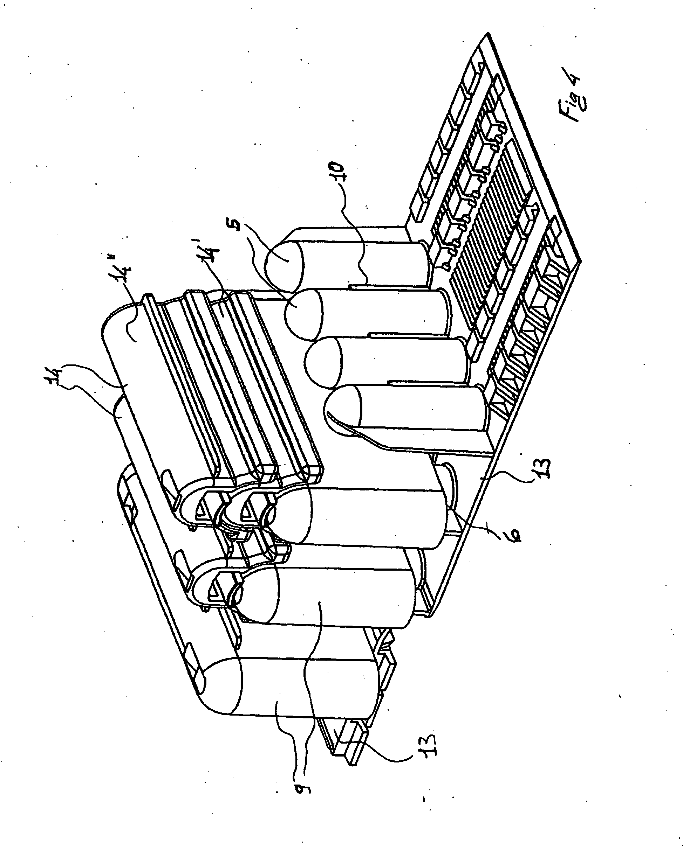

Figure 4 shows how the additional elements 9, also shown in figures 5, 6 and 7, can be inserted on the spacers, thereby increasing their height and therefore radial overall dimensions. The additional elements can be inserted on the spacers that are in the upper part of the pipe, for example on three or more adjacent spacers having the form of fins, preferably on the top part of the pipe prior to its insertion in the jacket pipe, so as to reduce play between the pipe and the jacket pipe and thereby reduce pipe displacement, in particular in a vertical direction, also in the event of floating, inside the jacket pipe.

It is apparent that the method can be applied to all or part of the collars of the section of pipe housed in the jacket pipe, to the same extent or not, according to the needs; this is also possible upon introduction of the pipe in the jacket pipe, thereby endowing the method according to the invention with considerable adaptability.

The shape of the additional element will be suited to the shape of the spacer; according to a preferred embodiment, the additional elements are such as to endow the spacers with the same radial dimension even when the latter are of different shape, for the reasons explained above. For example, in the case shown in figures 2 and 4, the spacers consist of elements 5 or 5' joined by a rib 10, extending from their base, that means from strip 13 of the module, designed to be wound on the pipe, for a certain height in a radial direction. They are inserted in specific indentations 12 present in the ribs 11 internal to the additional element 9, determining radial protrusion of the additional elements. In the case the spacers consist of shorter elements, such as those indicated with 5' in figure 2, as can be seen in figure 4, the ribs may be absent or such as to allow, for example, the additional element to rest directly against the strip 13. Other systems may be created in order to guarantee uniform protrusion of the additional elements, such as differentiated locators or other. It is apparent that the additional elements may also be of different types or not guarantee the same radial dimension also in view of the further possibilities of regulation permitted using supplementary elements, as explained below. However, the possibility of using a single type of additional element, with similar results for all the spacers, even when they have different structures in the same collar, simplifies laying the pipes, which is advantageous.

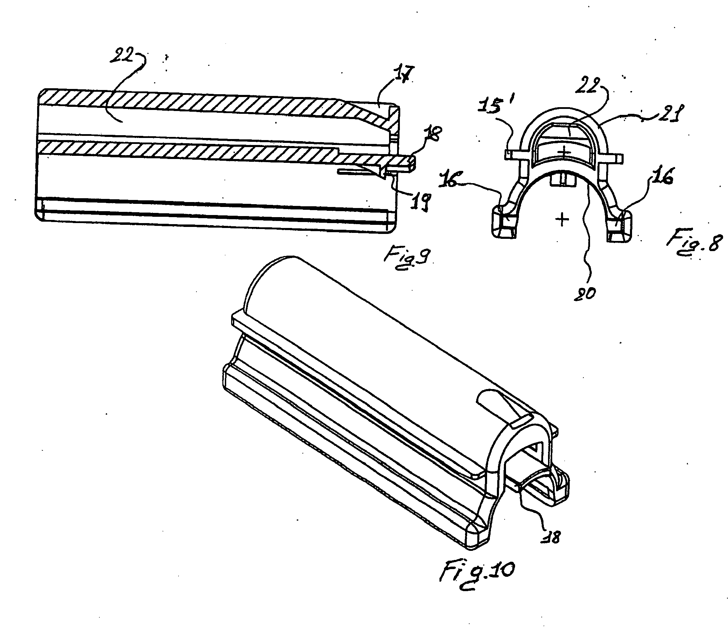

As explained, the additional elements preferably have means for fastening supplementary elements; according to a further preferred embodiment, the same supplementary have similar means, so that they become modular. Figure 4 shows supplementary elements 14 fastened (14') both to additional elements and (14") to other supplementary elements. These means for fastening may include, for example, longitudinal guides 15 (in figures 5 and 7), located on the side walls of the additional elements, on which the corresponding grooves 16 (see figures 8 and 9) of the supplementary elements may be inserted. The supplementary elements may also have similar guides 15'. Thus, a supplementary element can be inserted along a longitudinal direction on another element and may fasten further supplementary elements so as to increase the radial dimension of the spacer up to a desired extent. The grooves 16 may be apt to be inserted from both sides or, as in the case shown, have a closed end so that their movement stops when they are in the correct position.

According to a preferred embodiment, means for locking the supplementary elements to the additional elements and/or to other supplementary elements, preferably reversible, are also envisaged so as to prevent them from sliding out.

For example, indentations 17 of suitable shape may be present on the top of the elements, intended to accommodate a tooth 19 obtained on a portion 18 and having a shape such as to be elastic and positioned appropriately on the supplementary element. When the elements are in a reciprocally correct position, the tooth is inserted in the cavity and is maintained there by the elastic force of the portion 18, locking the elements one to the other; release is possible acting on portion 18, overcoming the elastic force and retracting the tooth from the indentation. Preferably, portion 18 may protrude from an end of the supplementary element; the additional and supplementary elements may have two indentations at opposite ends to allow insertion of other supplementary elements from both ends.

In the case shown, supplementary elements have only one indentation since the closed-end grooves establish a precise direction of introduction.

The supplementary element may have a concave part 20 to accommodate the top of the element whereto it is attached, and a convex top 21, adapt to endow this with the necessary dimension and to support a possible further supplementary element. There may be a gap 22 between the two parts in order to lighten the structure.

As said, it is preferred that the additional elements are suitable to be inserted on the spacers in a radial direction and the supplementary elements on other elements, in a longitudinal direction. This permits trouble-free fitting on collars of known type, such as those described above. Other types of collars or specifically produced collars may also be used, having means for fastening on the spacers, to permit application of additional elements in other ways, and also the supplementary elements may have different shapes and a different type of fastening system, if desired. Collars may also not be modular and may be constructed differently from those illustrated. Additional and supplementary elements in accordance with the shape of the spacers may also be designed. The longitudinal arrangement of the spacers is anyway preferred.

The method and the system according to the present invention allow precise, immediate regulation of the position of the pipe in the jacket pipe, by reducing play, if necessary, also to few centimetres, without hindrance to laying operations.

The additional elements and any supplementary elements may be applied to the spacers in particular of the upper sectors of the circumference of the pipe. For example, they may involve at least the upper spacer, preferably at least the three upper spaces, or an arc, centred on the pipe, of the upper portion of the pipe between 0 and, for example, 120°, in particular to prevent floating. They may also regard other positions if considered advisable for particular positioning requirements. The overall dimensions of the spacers concerned can be increased in a uniform or different manner according to requirements.

The elements may be produced according to known techniques and made of any suitable material. For example, they can be made of plastic such as polyethylene and can be obtained by injection moulding.

## Claims

1. Method for regulating a spacer collar for a pipe, said collar comprising a set of spacers (6), designed to be placed in a radial direction around said pipe, and further comprising application to at least part of said spacers (6) of additional elements (9) in a substantially radial direction with respect to the pipe, **characterized in that** one or more supplementary elements (14, 14') are fastened to at least one additional element (9) in a radial direction with respect to the pipe by means of sliding fastening means (17, 18, 19) suitable to allow the insertion of said supplementary elements (14, 14') on said additional element (9) in a direction substantially longitudinal with respect to the pipe.

2. Method according to any previous claim, **characterised in that** the spacers (6) are spacer fins arranged in a substantially longitudinal direction with respect to said pipe.

3. Method according to claim 2, **characterised in that** said fins consists of several elements (5, 5') substantially aligned in a longitudinal direction.

4. Method according to one or more of the preceding claims, **characterised by** comprising fastening at least one supplementary element (14") to at least another supplementary element (14, 14').

5. Method according to claim 4, **characterised by** comprising locking, using reversible means (17, 18, 19) said supplementary element to the element to which it is fastened.

6. System for positioning a pipe inside a jacket pipe, comprising a collar provided with spacers (6) designed to be placed in a radial direction around the pipe, and one or more additional elements (9) suitable to be applied to at least a part of said spacers (6) in a substantially radial direction with respect to the pipe, **characterized in that** it further comprises one or more supplementary elements (14, 14') which can be fastened to at least one of said additional element (9) in a radial direction with respect to the pipe by means of sliding fastening means (17, 18, 19) suitable to allow the insertion of said supplementary elements (14, 14') on at least a portion of said additional element (9) in a direction substantially longitudinal with respect to the pipe.

7. System according to claim 6, wherein said collar consists of several modules.

8. System according to claim 6 or 7, wherein said additional elements (9) and supplementary elements (14, 14') have means (15, 16) for fastening other supplementary elements (14, 14').

9. System according to claim 8 wherein the means for fastening include two guides (15) that can be inserted in specific grooves (16) of the supplementary element.

10. System according to any claim from 6 to 9, **characterised in that** said supplementary elements (14, 14') are made of plastic material, preferably polyethylene.

11. System according to claim 10 wherein said supplementary elements (14, 14') are obtained by injection moulding.

## Patentansprüche

1. Verfahren zum Einstellen eines Abstandhalterringes für ein Rohr, wobei der Ring einen Satz von Abstandhaltern (6) umfasst, die derart ausgelegt sind, dass sie in einer radialen Richtung um das Rohr angeordnet sind, und ferner umfassend eine Aufbringung von zusätzlichen Elementen (9) auf zumindest einen Teil der Abstandhalter (6) in einer im Wesentlichen radialen Richtung in Bezug auf das Rohr,
**dadurch gekennzeichnet, dass**
ein oder mehrere ergänzende Elemente (14, 14') an zumindest einem zusätzlichen Element (9) in einer radialen Richtung in Bezug auf das Rohr mittels eines gleitenden Befestigungsmittels (17, 18, 19) befestigt sind, das geeignet ist, um das Aufsetzen der ergänzenden Elemente (14, 14') auf das zusätzliche Element (9) in einer Richtung im Wesentlichen längs in Bezug auf das Rohr zu ermöglichen.

2. Verfahren nach einem der vorhergehenden Ansprüche,
**dadurch gekennzeichnet, dass**
die Abstandhalter (6) Abstandhalterrippen sind, die in einer im Wesentlichen längsgerichteten Richtung in Bezug auf das Rohr angeordnet sind.

3. Verfahren nach Anspruch 2,
**dadurch gekennzeichnet, dass**
die Rippen aus mehreren Elementen (5, 5') bestehen, die im Wesentlichen in einer Längsrichtung ausgerichtet sind.

4. Verfahren nach einem der vorhergehenden Ansprüche,
**dadurch gekennzeichnet, dass**
es umfasst, dass zumindest ein ergänzendes Element (14") an zumindest einem anderen ergänzenden Element (14, 14') befestigt wird.

5. Verfahren nach Anspruch 4,
**dadurch gekennzeichnet, dass**
es ein Verriegeln des ergänzenden Elements an dem Element, an dem es befestigt ist, unter Verwendung eines reversiblen Mittels (17, 18, 19) umfasst.

6. System zur Positionierung eines Rohres innerhalb eines Mantelrohres, mit einem Ring, der mit Abstandhaltern (6) versehen ist, die derart ausgelegt sind, dass sie in einer radialen Richtung um das Rohr angeordnet sind, und einem oder mehreren zusätzlichen Elementen (9), die zur Aufbringung auf zumindest einen Teil der Abstandhalter (6) in einer im Wesentlichen radialen Richtung in Bezug auf das Rohr geeignet sind,
**dadurch gekennzeichnet, dass**
es ferner ein oder mehrere ergänzende Elemente (14, 14') umfasst, die an zumindest einem des zusätzlichen Elements (9) in einer radialen Richtung in Bezug auf das Rohr mittels eines gleitenden Befestigungsmittels (17, 18, 19) befestigt sein können, das geeignet ist, um das Aufsetzen der ergänzenden Elemente (14, 14') auf zumindest einen Abschnitt des zusätzlichen Elementes (9) in einer Richtung im Wesentlichen längs in Bezug auf das Rohr zu ermöglichen.

7. System nach Anspruch 6,
wobei der Ring aus mehreren Modulen besteht.

8. System nach einem der Ansprüche 6 oder 7,
wobei die zusätzlichen Elemente (9) und die ergänzenden Elemente (14, 14') ein Mittel (15, 16) zur Befestigung anderer ergänzender Elemente (14, 14') besitzen.

9. System nach Anspruch 8,
wobei das Mittel zum Befestigen zwei Führungen (15) aufweist, die in spezifische Nuten (16) des ergänzenden Elementes eingesetzt sein können.

10. System nach einem der Ansprüche 6 bis 9,
**dadurch gekennzeichnet, dass**
die ergänzenden Elemente (14, 14') aus Kunststoffmaterial, bevorzugt Polyethylen hergestellt sind.

11. System nach Anspruch 10,
wobei die ergänzenden Elemente (14, 14') durch Spritzformen erhalten werden.

## Revendications

1. Procédé pour régler un collier d'entretoise pour un tuyau, ledit collier comprenant un ensemble d'entretoises (6), conçu pour être placé dans une direction radiale autour dudit tuyau, et comprenant en outre l'application sur au moins une partie desdites entretoises (6) d'éléments additionnels (9) dans une direction sensiblement radiale par rapport au tuyau, **caractérisé en ce qu'**un ou plusieurs éléments supplémentaires (14, 14') sont fixés sur au moins un élément additionnel (9), dans une direction radiale par rapport au tuyau, au moyen de moyens de fixation coulissants (17, 18, 19) appropriés pour permettre l'insertion desdits éléments supplémentaires (14, 14') sur ledit élément additionnel (9) dans une direction sensiblement longitudinale par rapport au tuyau.

2. Procédé selon l'une quelconque des revendications précédentes, **caractérisé en ce que** les entretoises (6) sont des ailettes d'entretoise agencées dans une direction sensiblement longitudinale par rapport audit tuyau.

3. Procédé selon la revendication 2, **caractérisé en ce que** lesdites ailettes se composent de plusieurs éléments (5, 5') sensiblement alignés dans une direction longitudinale.

4. Procédé selon une ou plusieurs des revendications précédentes, **caractérisé en ce qu'**il comprend l'étape consistant à fixer au moins un élément supplémentaire (14'') sur au moins un autre élément supplémentaire (14, 14').

5. Procédé selon la revendication 4, **caractérisé en ce qu'**il comprend l'étape consistant à bloquer, à l'aide de moyens réversibles (17, 18, 19), ledit élément supplémentaire sur l'élément sur lequel il est fixé.

6. Système pour positionner un tuyau à l'intérieur d'un tuyau chemisé, comprenant un collier prévu avec des entretoises (6) conçues pour être placées dans une direction radiale autour du tuyau, et un ou plusieurs éléments additionnels (9) appropriés pour être appliqués sur au moins une partie desdites entretoises (6) dans une direction sensiblement radiale par rapport au tuyau, **caractérisé en ce qu'**il comprend en outre un ou plusieurs éléments supplémentaires (14, 14') qui peuvent être fixés sur au moins l'un desdits éléments additionnels (9), dans une direction radiale par rapport au tuyau, au moyen de moyens de fixation coulissants (17, 18, 19) appropriés pour permettre l'insertion desdits éléments supplémentaires (14, 14') sur au moins une partie dudit élément additionnel (9) dans une direction sensiblement longitudinale par rapport au tuyau.

7. Système selon la revendication 6, dans lequel ledit collier se compose de plusieurs modules.

8. Système selon la revendication 6 ou 7, dans lequel lesdits éléments additionnels (9) et lesdits éléments supplémentaires (14, 14') ont des moyens (15, 16) pour fixer d'autres éléments supplémentaires (14, 14').

9. Système selon la revendication 8, dans lequel les moyens de fixation comprennent deux guides (15) qui peuvent être insérés dans des rainures spécifiques (16) de l'élément supplémentaire.

10. Système selon l'une quelconque des revendications 6 à 9, **caractérisé en ce que** lesdits éléments supplémentaires (14, 14') sont réalisés à partir d'une matière plastique, de préférence du polyéthylène.

11. Système selon la revendication 10, dans lequel lesdits éléments supplémentaires (14, 14') sont obtenus par moulage par injection.
